# EUROPÄISCHE PATENTSCHRIFT

(11) **EP 0 310 982 B1**
(45) Veröffentlichungstag und Bekanntmachung des Hinweises auf die Patenterteilung: **15.09.1993**
(21) Anmeldenummer: 88116296.0
(22) Anmeldetag: 01.10.1988
(51) Int. Cl.: H01M 10/50

(54) **Verfahren zur Vermeidung einer Überhitzung von Hochtemperatur-Speicherbatterien**
Process for preventing overheating of high temperature accumulators
Procédé pour empêcher le surchauffage d'accumulateurs travaillant à haute température

(30) Priorität: 09.10.1987 DE 3734221
(43) Veröffentlichungstag der Anmeldung: 12.04.1989
(73) Patentinhaber: Asea Brown Boveri Aktiengesellschaft, 68309 Mannheim (DE)
(72) Erfinder: Jessen, Jens-Christian, D-6904 Eppelheim (DE)
(74) Vertreter: Rupprecht, Klaus, Dipl.-Ing.

(56) Entgegenhaltungen:
- EP-A- 0 096 265
- DE-A- 3 513 079
- GB-A- 2 081 000

## Beschreibung

Die Erfindung bezieht sich auf ein Verfahren zur Vermeidung der Überhitzung von Hochtemperatur-Speicherbatterien gemäß dem Oberbegriff des Patentanspruches 1.

Solche Hochtemperatur-Speicherbatterien, die unter Verwendung von wiederaufladbaren elektrochemischen Speicherzellen aufgebaut sind, werden in vermehrtem Maße für den Elektroantrieb von Fahrzeugen eingesetzt.

Die bis jetzt bekannt gewordenen Hochtemperatur-Speicherbatterien sind aus einer Vielzahl von elektrochemischen Speicherzellen aufgebaut. Für die Bildung solcher Hochtemperatur-Speicherbatterien die einen Energieinhalt von etwa 40 kWh aufweisen sollen, sind etwa 500 Speicherzellen erforderlich. Diese Speicherzellen beinhalten Natrium und Schwefel als Reaktanden und arbeiten bei einer Temperatur von 350 °C. Um Wärmeverluste zu vermeiden sind die Speicherzellen von einer thermischen Isolierung umgeben. Andererseits muß jedoch auch für eine ausreichende Kühlung der Speicherzellen gesorgt werden, damit die Betriebstemperatur derselben nicht überschritten und eine Beschädigung der Speicherzellen unterbunden wird.

Bei den bisher bekannten Hochtemperaturspeicherbatterien erfolgt die Kühlung der Speicherzellen vorzugsweise durch Luft, welche an den Speicherzellen vorbeigeleitet, bzw. durch Kühlkanäle hindurchgeführt wird, die zwischen den Speicherzellen angeordnet sind. Um die Innentemperatur der Hochtemperaturspeicherbatterien auf der gewünschten Arbeitstemperatur zu halten, und die Ausbildung von Wärmenestern zwischen den Speicherzellen zu vermeiden, sind die bisher verwendeten Kühleinrichtungen wesentlich größer ausgebildet als erforderlich.

Aus der GB-A-2 018 000 ist eine Kontrolleinrichtung für die Temperatur von Natriumschwefelbatterien bekannt. Die zu überwachenden Batterien enthalten eine Vielzahl von Speicherzellen, die zu Modulen zusammengefaßt sind. Durch jeden Modul kann ein Wärme- und/oder Kühlmittel hindurchgeleitet werden. Mit Hilfe von temperaturkontrollierten Ventilen wird der Fluß des Mediums überprüft. Steigt die Temperatur in einer solchen Batterie auf 370°an, so wird ein Kühlmittel durch die Module geleitet, während beim Absinken der Temperatur auf einen Wert von 300°C ein Wärmemittel durch die Module geleitet wird. Die Ventile, mit deren Hilfe die Steuerung des Kühl- und/oder Wärmemittels erfolgt, öffnen und schließen bei den oben angegebenen Temperaturen.

Der Erfindung liegt die Aufgabe zugrunde, ein Verfahren zur Vermeidung der Überhitzung einer Hochtemperaturspeicherbatterie aufzuzeigen, mit dem die vorgegebene Innentemperatur auch mit einer Kühleinrichtung betrieben werden kann, die kleiner dimensioniert ist als beim Stand der Technik.

Diese Aufgabe wird erfindungsgemäß durch die Merkmale des Patentanspruches 1 gelöst.

Das Verfahren ist so ausgebildet, daß die Kühleinrichtung nur dann betätigt wird, wenn durch die abgegebene Leistung der Sollwert der Innentemperatur der Hochtemperaturspeicherbatterie überschritten wird. Vorzugsweise entspricht dieser Sollwert der Innentemperatur der Arbeitstemperatur der Speicherzellen. Durch eine zusätzliche Begrenzung der abgegebenen Leistung beim Erreichen eines definierten Wertes der Innentemperatur kann diese an einem weiteren Ansteigen gehindert werden. Dies bedeutet gleichzeitig, daß die Begrenzung der Innentemperatur und ihre Rückführung auf den gewünschten Sollwert nicht durch die Kühleinrichtung alleine bewirkt werden muß. Hiermit ist es möglich, eine kleiner dimensionierte Kühleinrichtung zu verwenden.

Weitere erfindungswesentliche Merkmale sind in den Unteransprüchen gekennzeichnet.

Das erfindungsgemäße Verfahren wird nachfolgend anhand einer Zeichnung erläutert.

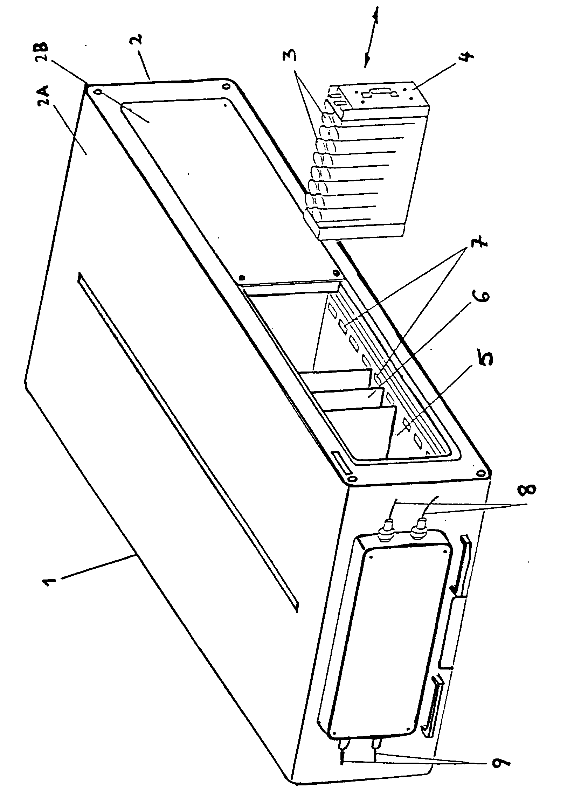

Die einzige Figur zeigt eine Hochtemperatur-Speicherbatterie 1, mit einem doppelwandigen Gehäuse 2 und Speicherzellen 3, die zu Modulen 4 zusammengefaßt sind. Zwischen der äußeren Gehäusewandung 2A und der inneren Gehäusewandung 2B befindet sich ein evakuierter Raum, der mit einem Isoliermaterial (hier nicht dargestellt) ausgefüllt ist. Im Inneren des Gehäuses 2 ist ein Hohlraum 5 vorgesehen, der mit Hilfe von Trennwänden 6 in einzelne Abschnitte unterteilt ist. Jeder Abschnitt weist mindestens eine Zuführung 7 für Luft auf. Jeder Modul 4 enthält eine definierte Anzahl von Speicherzellen 3. Jeweils ein Modul 4 ist in einem Abschnitt des Innenraumes 5 angeordnet. Desweiteren sind Leitungen 8 und 9 vorgesehen, über welche die Zu- und Abfuhr der Kühlluft und der elektrische Anschluß der Speicherzellen 3 nach außenhin erfolgt. Bei der hier dargestellten Hochtemperaturspeicherbatterie wird die Luft durch die Öffnungen 7 in den Innenraum 5 derselben eingeleitet. Über weitere Öffnungen (hier nicht dargestellt) wird die Kühlluft wieder nach außen geleitet. Die Speicherzellen 3 arbeiten bei einer Temperatur T_{A} von 350 °C. Diese Temperatur T_{A} sollte nur wenig unter bzw. nur wenig überschritten werden, so daß die Speicherzellen 3 immer eine optimale Leistung abgeben und nicht, z. B. durch eine Überhitzung beschädigt werden. Deshalb wird der Sollwert T₁ der Innentemperatur T ebenfalls auf 350 °C festgelegt. Beim Betrieb der Hochtemperatur-Speicherbatterie 1 wird deren Innentemperatur T durch die Verlustwärme des erzeugten Stromes bzw. die abgegebenen Leistung sowie die Wärmeabfuhr der Kühleinrichtung und die thermischen Verluste der Batterieisolation bestimmt. Damit das Gewicht der Hochtemperatur-Speicherbatterien nicht zu groß wird, werden diese mit Kühleinrichtungen ausgerüstet, die so klein wie möglich ausgebildet sind. Um eine Überhitzung der Hochtemperatur-Speicherbatterien mit dieser klein dimensionierten Kühleinrichtung zu vermeiden, wird erfindungsgemäß zunächst der Strom bzw. die Leistung berechnet, die unter Berücksichtigung der verfügbaren Kühlleistung und der thermischen Verluste der Hochtemperatur-Speicherbatterie 1 eine Innentemperatur T von 350 °C hervorruft. Dieser Strom berechnet sich gemäß der nachfolgenden Gleichung: 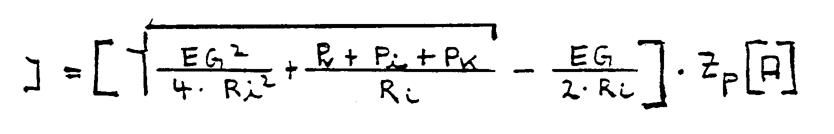
In der obigen Gleichung steht EG stellvertretend für das Entrophieglied, Ri für den Zellinnenwiderstand (Ohm), Pi für die thermischen Verluste durch die Isolation, Pv für sonstige thermische Verluste der Batterie, Pk für die Wärmeabfuhr durch die Kühleinrichtung und Zp für die Anzahl der parallel geschalteten Speicherzellen 3.

Wird nun an einen Verbraucher (hier nicht dargestellt), der an die Hochtemperaturspeicherbatterie 1 angeschlossen ist, dieser berechnete Strom bzw. die zugehörige Leistung abgegeben, so wird gleichzeitig die Innentemperatur T der Hochtemperatur-Speicherbatterie kontinuierlich gemessen. Bei dem hier dargestellten Ausführungsbeispiel wird davon ausgegangen, daß die maximal zulässige Innentemperatur Tₘ der Hochtemperatur-Speicherbatterie 380°C beträgt. Nähert sich die Innentemperatur T einem Wert von 350 °C, welcher der Arbeitstemperatur T_{A} der Speicherzelle 3 entspricht, so wird die Kühleinrichtung eingeschaltet, und den Speicherzellen 3 über die Öffnungen 7 Kühlluft zugeführt. Die Temperatur T₂, bei der die Kühlung eingeschaltet wird, wird einmal für jeden Batterietyp ermittelt und liegt bei 350 °C. Sie kann jedoch auch etwas oberhalb liegen. Wird bei den Messungen der Innentemperatur T festgestellt, daß diese über 350 °C ansteigt und sich einer Temperatur T₃ von, Z.B. 360 °C nähert, wird die abgegebene Leistung der Hochtemperatur-Speicherbatterie reduziert. Es wird dann nur ein solcher Strom erzeugt, dessen Verlustwärme eine Innentemperatur hervorruft, die dem angestrebten Wert der Innentemperatur T₁ von 350 °C entspricht. Damit diese Einstellung auf einen neuen Strom einfach möglich ist, werden nach der Fertigstellung der Hochtemperaturspeicherbatterie 1 zu mehreren Stromwerten die zugehörigen Innentemperaturen unter Zugrundelegung der spezifischen Parameter der Hochtemperaturspeicherbatterie 1 ermittelt.

Diese so eingestellte reduzierte Leistung wird solange beibehalten, bis die Innentemperatur T wieder etwa 92 % ihres Maximalwertes Tₘ aufweist. Ist dieser Zustand erreicht, so wird die Kühleinrichtung wieder abgeschaltet und die Begrenzung der Leistungsabgabe wieder aufgehoben.
Durch diese Maßnahmen ist es möglich, die Hochtemperatur-Speicherbatterie mit einer Kühleinrichtung zu versehen, die wesentlich kleiner dimensioniert ist als die Einrichtungen bei herkömmlichen Hochtemperaturspeicherbatterien dieser Art. Durch die ständige Kontrolle der Innentemperatur T wird sichergestellt, daß die Arbeitstemperatur T_{A} der Speicherzellen 3 überhaupt nicht, oder nur geringfügig unter bzw. überschritten wird.

## Patentansprüche

1. Verfahren zur Vermeidung der Überhitzung einer Hochtemperaturspeicherbatterie (1) mit einer Kühleinrichtung zur Aufrechterhaltung der gewünschten Innentemperatur (T), wobei die Innentemperatur (T) kontinuierlich gemessen und beim Ansteigen auf einen ersten Temperaturwert (T₂) die Kühleinrichtung eingeschaltet wird, **dadurch gekennzeichnet,** daß die Innentemperatur (T) kontinuierlich mit einem Sollwert (T₁) verglichen wird, daß bei einem weiteren Ansteigen der Innentemperatur (T) auf einen zweiten, definierten Temperaturwert (T₃) die von der Batterie (1) abgegebenen Leistung reduziert wird, um die Innentemperatur (T) zu begrenzen, und daß beim Absinken der Innentemperatur (T) auf den Sollwert (T₁) zunächst die Leistungsbegrenzung aufgehoben und anschließend die Kühleinrichtung abgeschaltet wird.

2. Verfahren nach Anspruch 1, dadurch gekennzeichnet, daß der Sollwert (T₁) der Innentemperatur (T) so gewählt wird, daß sie der Arbeitstemperatur (T_{A}) der Speicherzellen (3) entspricht.

3. Verfahren nach einem der Ansprüche 1 oder 2, dadurch gekennzeichnet, daß der Sollwert (T₁) der Innentemperatur (T) auf 350°C oder etwas darunter festgelegt wird.

4. Verfahren nach einem der Ansprüche 1 bis 3, dadurch gekennzeichnet, daß zur Reduzierung der Innentemperatur (T) das Einschalten der Kühlvorrichtung bei 360° oder geringfügig darüber erfolgt.

5. Verfahren nach einem der Ansprüche 1 bis 4, dadurch gekennzeichnet, daß die maximal zulässige Innentemperatur (Tₙ) auf einen Wert von 380°C festgelegt wird.

6. Verfahren nach einem der Ansprüche 1 bis 5, dadurch gekennzeichnet, daß die Leistungsbegrenzung beim Erreichen einer Temperatur (T₃) eingeleitet wird, die zwischen 92 und 97% der maximal zulässigen Innentemperatur (Tₘ) liegt.

7. Verfahren nach einem der Ansprüche 1 bis 6, dadurch gekennzeichnet, daß zu dem vorgegebenen Sollwert (T₁) der Innentemperatur (T) die maximal mögliche Leistung unter Berücksichtigung der verfügbaren Kühlleistung und der thermischen Verluste der Hochtemperaturspeicherbatterie (1) nach Fertigstellung desselben einmal rechnerisch ermittelt wird.

## Claims

1. Method for avoiding the overheating of a high-temperature storage battery (1) with a cooling system for maintaining the desired internal temperature (T), in which the internal temperature (T) is continuously measured and if it rises to a first temperature value (T₂), the cooling system is switched on, characterised in that the internal temperature is continually compared with a setpoint (T₁), in that if the internal temperature (T) increases further to a second specified value of temperature (T₃), the power delivered by the battery (1) is reduced in order to limit the internal temperature, and in that, when the internal temperature (T) drops to the setpoint (T₁), the power limitation is first removed and then the cooling system is switched off.

2. Method according to Claim 1, characterised in that the setpoint (T₁) of the internal temperature (T) is so chosen that it corresponds to the working temperature (T_{A}) of the storage cells (3).

3. Method according to one of Claims 1 or 2, characterised in that the setpoint (T₁) of the internal temperature (T) is set to 350°C or somewhat below that.

4. Method according to one of Claims 1 to 3, characterised in that, to reduce the internal temperature (T), the cooling device is switched on at 360°C or slightly above.

5. Method according to one of Claims 1 to 4, characterized in that the maximum permissible internal temperature (Tₙ [sic]) is set to a value of 380°C.

6. Method according to one of Claims 1 to 5, characterised in that the power limitation is introduced on reaching a temperature (T₃) which lies between 92 and 97% of the maximum permissible internal temperature (Tₘ).

7. Method according to one of Claims 1 to 6, characterised in that the maximum possible power is determined once by calculation for the specified setpoint (T₁) of the internal temperature (T), taking account of the available cooling power and of the thermal losses of the high-temperature storage battery (1), after the same has been manufactured.

## Revendications

1. Procédé pour éviter la surchauffe d'une batterie (1) d'accumulateurs à haute température avec un dispositif de refroidissement pour maintenir la température intérieure (T) désirée, la température intérieure (T) étant mesurée de manière continue et le dispositif de refroidissement étant activé lorsque la température atteint une première valeur (T₂), caractérisé par le fait que l'on compare de manière continue la température intérieure (T) à une valeur de consigne (T₁), par le fait que, dans le cas où la température intérieure (T) croît encore, jusqu'à une deuxième valeur de température définie (T₃), on réduit la puissance fournie par la batterie afin de limiter la température intérieure (T), et par le fait qu'en cas de décroissance de la température intérieure (T) jusqu'à la valeur de consigne (T₁), on supprime d'abord la limitation de puissance et, ensuite, on met hors service le dispositif de refroidissement.

2. Procédé selon revendication 1, caractérisé par le fait que l'on choisit la valeur de consigne (T₁) de la température intérieure (T) de manière qu'elle corresponde à la température de travail (T_{A} des éléments accumulateurs (3).

3. Procédé selon la revendication 1 ou 2, caractérisé par le fait que l'on fixe la valeur de consigne (T₁) de la température intérieure (T) à 350°C ou un peu en dessous.

4. Procédé selon l'une des revendications 1 à 3, caractérisé par le fait que la mise en service du dispositif de refroidissement, pour réduire la température intérieure (T) a lieu à 360°C ou légèrement au-dessus.

5. Procédé selon l'une des revendications 1 à 4, caractérisé par le fait que l'on fixe à une valeur de 380°C la température intérieure maximale admissible (Tₙ).

6. Procédé selon l'une des revendications 1 à 5, caractérisé par le fait que l'on provoque la limitation de puissance lorsqu'une température (T₃) comprise entre 92 et 97 % de la température intérieure maximale admissible (Tₘ) est atteinte.

7. Procédé selon l'une des revendications 1 à 6, caractérisé par le fait que, pour la valeur de consigne (T₁) prédéterminée de la température intérieure (T), on détermine par le calcul, une première fois après fabrication de la batterie d'accumulateurs à haute température, la puissance maximale possible en tenant compte de la puisance de refroidissement disponible et des pertes thermiques de la batterie d'accumulateurs à haute température (1).
